Europäisches Patentamt

European Patent Office

Office européen des brevets

(11) Veröffentlichungsnummer: **0 070 960**
**B1**

(12) **EUROPÄISCHE PATENTSCHRIFT**

(45) Veröffentlichungstag der Patentschrift:
02.10.85

(21) Anmeldenummer: **82102125.0**

(22) Anmeldetag: **16.03.82**

(51) Int. Cl.⁴: **C 02 F 3/12, F 24 J 3/00**

(54) Vorrichtung zur biologischen Reinigung organischer Abwässer.

(30) Priorität: **29.07.81 DE 3129926**

(43) Veröffentlichungstag der Anmeldung:
**09.02.83 Patentblatt 83/6**

(45) Bekanntmachung des Hinweises auf die Patenterteilung:
**02.10.85 Patentblatt 85/40**

(84) Benannte Vertragsstaaten:
**AT BE CH DE FR GB IT LI NL SE**

(56) Entgegenhaltungen:
**EP - A - 0 008 176**
**CH - A - 550 744**
**US - A - 2 380 465**
**US - A - 3 749 246**
**US - A - 4 130 481**

(73) Patentinhaber: **Bayerische Milchindustrie eG,
Klötzlmüllerstrasse 140, D-8300 Landshut (DE)**

(72) Erfinder: **Traxdorf, Klaus, D-8601 Zapfendorf (DE)**
Erfinder: **Schöner, Klaus, D-8601 Zapfendorf (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

BUNDESDRUCKEREI BERLIN

# Beschreibung

Die Erfindung bezieht sich auf eine Vorrichtung zur biologischen Reinigung vornehmlich stark belasteter organischer Abwässer, mit wenigstens zwei miteinander über eine Verbindungsleitung verbundenen, als geschlossene Druckbehälter ausgebildeten Belebtschlammspeicher, die jeweils im Bodenbereich Belüftungseinrichtungen zum Einleiten von Sauerstoff in das Abwasser aufweisen und in ihren jeweiligen oberen Bereichen über dem Abwasserraum einen Gas-, Schwimmschlamm- oder Blähschlamm-Sammelraum besitzen.

Aus der US-PS 2 380 465 ist eine Vorrichtung der eben genannten Art bekannt, bei der drei Druckbehälter hintereinander angeordnet sind. Das Abwasser wird in den ersten Behälter unterhalb der Wasserlinie in den Abwasserraum eingeleitet und im Bodenbereich durch die Verbindungsleitung abgeführt. Sie mündet beim nächsten Behälter wiederum unterhalb der Wasserlinie.

Zum Belüften der Druckbehälter sind jeweils Belüfterkerzen vorgesehen, die sich im Bodenbereich befinden. Beim ersten Druckbehälter ist die Belüfterkerze mit einer Luft- bzw. Sauerstoffversorgungsleitung verbunden, die in der Mittelachse des Druckbehälters nach oben geführt ist, im Kuppelbereich den Behälter verläßt und sodann zu einer am Boden stationär angeordneten Pumpe hingeführt ist. Es wird lediglich der erste Druckbehälter frisch mit Luft bzw. Sauerstoff versorgt. Die nachfolgenden Druckbehälter werden mit dem Gas gespeist, das im jeweils vorgeschalteten Behälter im Gassammelraum anfällt.

Die bekannte Vorrichtung hat verschiedene Nachteile. Das Abwasser wird von dem jeweils vorgeschalteten Behälter im Bodenbereich abgezogen und unterhalb der Wasserlinie in den nachgeschalteten Behälter eingetragen. Die so gestaltete Verbindungsleitung kann leicht verstopfen, noch dazu, da der Boden der bekannten Behälter als nach unten gerichteter Trichter ausgebildet ist, an dessen unterer Spitze die Verbindungsleitung beginnt. Ist jedoch die Verbindungsleitung verstopft, so kann die Vorrichtung nicht mehr arbeiten. Auch ist die Verbindungsleitung so angeordnet, daß der im Kopfbereich der Behälter anfallende Schwimmschlamm oder Blähschlamm nicht mit abgezogen wird.

Bei der bekannten Vorrichtung ist lediglich der erste Druckbehälter ausreichend mit Sauerstoff bzw. Luft versorgt. Die ihm nachfolgenden Druckbehälter verwenden jeweils das sich im vorgeschalteten Druckbehälter ergebende Gas zum Belüften. Dies mag zu einer Unterversorgung der nachgeschalteten Belebtschlammspeicher führen. Nachteilig ist auch, daß die Luftspeiseleitung für die nachgeschalteten Druckbehälter jeweils im Gas-Schwimmschlamm- oder Blähschlamm-Sammelraum des vorgeschalteten Druckbehälters beginnt. Wird von der Luft-Speiseleitung Schwimm- oder Blähschlamm aufgenommen, so verstopfen die Belüftungseinrichtungen der nachgeschalteten Druckbehälter.

Der Erfindung liegt die Aufgabe zugrunde, eine Vorrichtung der eingangs genannten Art dahingehend weiterzubilden, daß ein Verstopfen der Vorrichtung verhindert und eine sichere Reinigung der Abwässer erreicht wird.

Diese Aufgabe wird erfindungsgemäß dadurch gelöst, daß die Verbindungsleitung beim vorgeschalteten Druckbehälter an der unteren Grenze des Gassammelraumes beginnt und als druckfester Überlauf beim nachgeschalteten Behälter im Abwasserraum endet, wobei zur Bildung einer Kaskadenanordnung für die Behälter der Überlauf des jeweils folgenden Behälters tiefer angeordnet ist als der Überlauf des vorhergehenden und daß die Belüftungseinrichtung jedes Druckbehälters mit einer Sauerstoffzufuhrleitung verbunden ist.

Bei der Erfindung beginnt die Verbindungsleitung an der unteren Grenze des Gassammelraumes. Sie befindet sich damit in Höhe der Wasserlinie jedes Druckbehälters. Dies bedeutet, daß sowohl das Abwasser als auch sich eventuell bildender Schwimm- oder Blähschlamm abgeführt wird. Das Wasserniveau innerhalb des Behälters regelt sich selbst ein. Sollte die Verbindungsleitung verstopfen, so baut sich innerhalb des Druckbehälters ein Überdruck auf, der die Verstopfung zu beseitigen hilft.

Der oberhalb des Abwasserraums vorhandene Freiraum innerhalb des Druckbehälters dient sowohl zur Aufnahme des Sauerstoffes als auch des Schlammes. Er verdichtet den Schlamm und verringert auf diese Weise sein Volumen. Das gesammelte Gas und der sich bildende Schlamm werden im Überlauf vermischt und in das Abwasser des nächsten Behälters eingetragen. Die im Schwimmschlamm enthaltenen Schwebestoffe und das Gas, inklusive des Sauerstoffes, werden dadurch wieder in das Abwasser des nächsten Behälters eingewälzt. Der Restsauerstoff wird infolgedessen nochmals benutzt. Die Schwebestoffe erhalten im Abwasser des nachgeschalteten Behälters die Möglichkeit, weiterverarbeitet zu werden. Restbestände vorhandener Sedimente werden durch den Überlauf stabilisiert und abgebaut, so daß in der Folge die Problematik des sonst entstehenden Bläh- oder Schwimmschlammes entfällt.

Die Kaskadenanordnung sorgt für eine selbsttätige Strömung durch die einander nachgeschalteten Behälter. Bei der erfindungsgemäßen Vorrichtung wird die Belüftungseinrichtung jedes Druckbehälters frisch mit Belüftungsgas, beispielsweise Luft oder Sauerstoff, versorgt. Die Gefahr des Umkippens wegen mangelnder Gasversorgung des Belebtschlammes wird damit ausgeschaltet.

Die erfindungsgemäßen Druckbehälter ermöglichen deshalb eine mehrmalige Ausnützung des eingetragenen Sauerstoffes. Besonders vorteilhaft wird der Sauerstoff dann verwendet, wenn die Behälter eine gegenüber ihrem Durchmesser größere vertikale Erstreckung aufweisen. Die Belüftungseinrichtung kann sich über den gesamten Boden des Behälters erstrecken. Die relativ große vertikale Ausrichtung der Behälter bietet die Möglichkeit, den eingetragenen Sauerstoff sehr viel intensiver zu nutzen, als dies beispielsweise bei den normalen Becken herkömmlicher Kläranlagen der Fall ist.

Für das Abscheiden des Schlammes am Ende der Abwasserreinigung ist es günstig, wenn den Druckbehältern wenigstens ein unbelüfteter Absetzbehälter für den Schlamm nachgeschaltet ist.

Um die Reinigung der Abwässer insbesondere bei Schwankungen von Menge und Art steuern zu können, ist es vorteilhaft, wenn dem ersten Druckbehälter ein Sammeltank zum Bereithalten von rückgeführtem Belebtschlamm vorgeschaltet ist. Der Belebtschlamm kann dann nach Wunsch wenigstens dem ersten Druckbehälter zum Impfen des neu eingeführten Abwassers zugeführt werden. Auf diese Weise wird verhindert, daß die den Belebtschlamm bildenden Mikroorganismen durch die fortschreitende Reinigung der Abwässer zunehmend aus den Behältern ausgetragen wird.

Eine weitere Steuerung des Reinigungsvorganges ist dadurch möglich, daß der Abwasserzulauf zum ersten Druckbehälter mit einer Temperaturregulierungseinrichtung, z. B. in Form einer Wärmepumpe versehen ist. Werden heiße Abwässer zugeleitet, so kann mit Hilfe der Wärmepumpe die Temperatur auf den für die Mikroorganismen günstigsten Bereich eingestellt werden. Dies bedeutet, daß sofort der richtige Abbau der Abwässer einsetzt, und der Belebtschlamm nicht etwa durch zu heiße Abwässer in seiner Existenz gefährdet wird. Der biologische Abbau ist auf diese Weise voll steuerbar. Die Sauerstoffbindung kann optimiert werden. Die Abwärme ist wirtschaftlich wieder verwendbar.

Nachfolgend wird ein Ausführungsbeispiel der Erfindung anhand einer Zeichnung beschrieben.

Fig. 1 zeigt eine Schemaskizze einer Vorrichtung zur biologischen Reinigung organisch belasteter Abwässer mit insgesamt drei Belebtschlamm-Druckbehältern, einem Absetzbehälter und einem Sammeltank, und

Fig. 2 zeigt eine schematische Darstellung der Abbauleistung über der Abbauzeit.

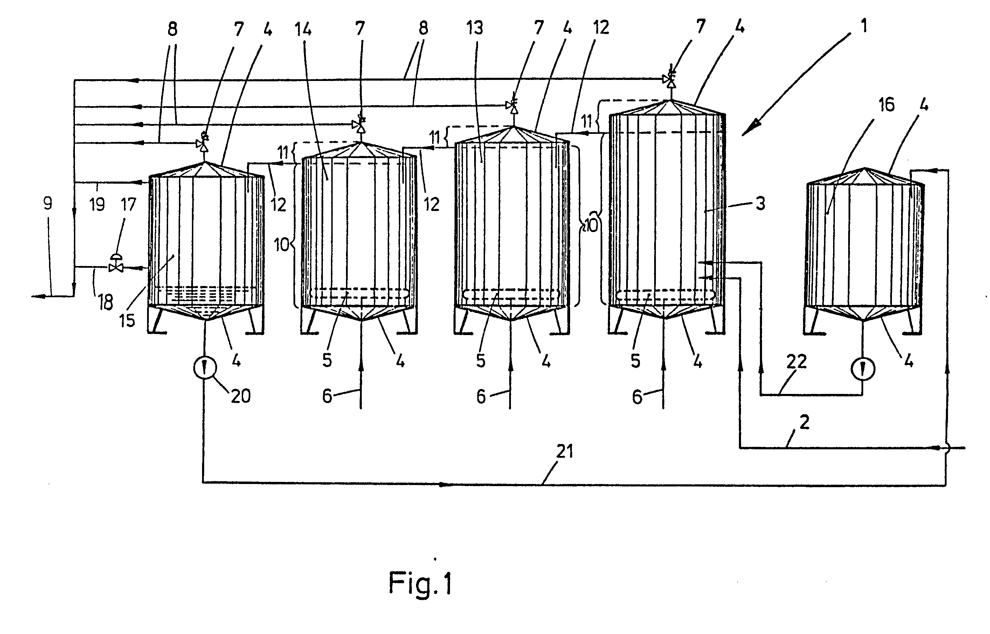

In Fig. 1 ist eine Vorrichtung zur biologischen Reinigung stark belasteter organischer Abwässer gezeigt. Im vorliegenden Fall dient sie zur Reinigung von Abwässern der Milchindustrie, die über einen Zulauf 2 in einen ersten Druckbehälter 3 eingetragen werden. Der Zulauf 2 mündet im Bereich des Bodens des allseitig geschlossenen Druckbehälters 3, der als vertikaler Zylinder mit zwei kegelartigen Stirnhauben 4 ausgebildet ist. Im Bereich der unteren Stirnhaube ist eine Belüftungseinrichtung 5 fest installiert, die mit Hilfe handelsüblicher Belüftungskerzen über den gesamten Zylinderquerschnitt des Behälters Luft bzw. Sauerstoff in den Behälter einträgt. Die Belüftungseinrichtung wird über eine Leitung 6 mit Luft bzw. Sauerstoff versorgt.

An der oberen Stirnhaube ist ein Überdruckventil 7 vorhanden, das über eine Leitung 8 mit einem Ablauf 9 verbunden ist. Das Überdruckventil dient als Sicherheitseinrichtung. Sollte innerhalb des Behälters ein nicht mehr zulässiger Druck entstehen, so bläst dieser über die Leitung 8 in den Ablauf 9 ab.

Das Innere des Druckbehälters ist in zwei Räume aufgeteilt, nämlich in den unteren Raum 10 für die Aufnahme des Abwassers, und in einen etwa 10% des Tankvolumens umfassenden oberen Raum 11, der als Sammelraum für Gas, Schwimm- oder Blähschlamm ausgebildet ist. An der Grenze zwischen dem Raum 11 und 10 befindet sich in der Zylinderwandung des Behälters 10 ein Überlauf 12 in Form eines Druckrohres, das waagerecht aus dem geschilderten Druckbehälter 3 in einen nachgeschalteten Druckbehälter 13 hineingeführt ist, der vom grundsätzlichen Aufbau her ebenso wie ein dritter Behälter 14 genauso aufgebaut ist, wie der Behälter 3. Übereinstimmende bzw. analoge Teile der Behälter 13 und 14 sind deshalb mit den gleichen Bezugsziffern versehen, wie der Behälter 3. Der Überlauf 12 mündet bei dem jeweils folgenden Behälter unterhalb der Grenze zwischen dem Abwasserraum 10 und dem Sammelraum 11, so daß die durch den Überlauf geförderten Fluide auf jeden Fall beim folgenden Behälter wiederum in das Abwasser eingetragen werden.

Die erfindungsgemäße Vorrichtung umfaßt in der gezeigten Ausführungsform die bereits angegebenen drei Druckbehälter 3, 13 und 14. Die Behälter sind kaskadenartig hintereinander angeordnet, wobei der Überlauf 12 des jeweils folgenden Behälters tiefer angeordnet ist, als der Überlauf des Vorhergehenden. Bei allen Behältern ist die vertikale Erstreckung größer als der Durchmesser.

Dem letzten Druckbehälter 14 ist ein sogenannter Absetzbehälter 15 nachgeschaltet, der unbelüftet ist. Dieser weist ebenso wie ein noch nachfolgend anzugebender Sammeltank 16 die vertikale zylindrische Gestalt der Druckbehälter 3 und die kegelartigen Stirnhauben 4 auf. Der Absetzbehälter besitzt im unteren Bereich seiner Mantelfläche eine mit einem Ventil 17 versehene Verbindungsleitung 18 zum Ablauf 9. Am oberen Bereich des Zylindermantels besitzt er einen Überlauf 19, der ebenfalls in den Ablauf 9 mündet. Das Ventil 17 ist niveaugesteuert, und schafft die Möglichkeit, bei eventuell großen Mengen zusätzlichen Abwassers den Absetzbehälter 15 zusätzlich zu entleeren.

An der Bodenstirnhaube 4 des Absetzbehälters 15 beginnt eine durch eine Pumpe 20 unterstützte Rücklaufleitung 21, die zu dem Sammelbehälter 16 führt und dort an der oberen Stirnhaube 4 mündet. Sie dient zum Rückführen eines Teiles des im Absetzbehälter aufgefangenen Belebtschlammes. Zu diesem Zwecke führt von der Bodenhaube 4 des Absetzbehälters 16 eine Impfleitung 22 zum ersten Druckbehälter 3. Sie mündet dort im Bodenbereich in der Nähe des Zulaufes 2.

Der Zulauf 2 ist in nicht gezeigter Weise mit einer Wärmepumpe zum Einstellen der Temperatur des in den Druckbehälter 3 einzutragenden Abwassers versehen.

Die erfindungsgemäße Vorrichtung arbeitet dergestalt, daß über einen Zulauf 2 z. B. temperatureingestellte Abwässer der Milchindustrie in den ersten Drucktank 3 eingeführt werden. Zusammen mit dem frischen Abwasser wird aus dem Sammeltank 16 rückgeführter Belebtschlamm eingeführt, der das frische Abwasser mit den Mikroorganismen des Belebtschlammes anreichert. Von unten wird über die Leitung 6 und mit Hilfe der Belüftungseinrichtung 5 Luft bzw. Sauerstoff in das Behälterinnere eingetragen. Derselbe durchströmt insbesondere in Form kleiner Luftperlen das Abwasser, das den gesamten Raum 10 einnimmt. Das aufsteigende Gas und der Sauerstoff wird im Raum 11 aufgefangen, wobei sich das Gas komprimiert und eventuell dort vorhandene Sedimente, Schwimm- oder Blähschlamm verdichtet. An der Grenze zwischen dem Raum 10 und 11 befindet sich der Überlauf 12, durch den sich sowohl das Abwasser, die aufgefangenen Gase, als auch eventuelle Sedimente und Bläh- und Schwimmschlammteile in den nächsten Tank entleeren, wo sie in das Abwasser eingetragen werden.

Der dem Behälter 3 nachfolgende Behälter 13 ist geringfügig niedriger ausgebildet, als der vorgeschaltete Behälter, aber besitzt den gleichen Aufbau und die gleiche Funktion. Auch dort wird das Abwasser durch den Belebtschlamm gereinigt. Zur Aktiverhaltung des Belebtschlammes dient der ebenfalls im Bodenbereich eingetragene Sauerstoff. Auch beim Druckbehälter 13 wird die Mischung aus Gas, Abwasser und Schlamm über den Überlauf 11 in das Abwasser des nächsten Druckbehälters 14 eingetragen, wo das Belebtschlammverfahren weitergeführt wird.

Dem Behälter 14 ist ein unbelüfteter Absetzbehälter 15 nachgeschaltet, der für die Aufnahme des geklärten Abwassers und des Belebtschlammes dient. Der Überlauf 19 dient als Regelüberlauf zur Abfuhr des geklärten Abwassers und eventuell überflüssigen Belebtschlammes in den Ablauf 9. Die Verbindungsleitung 18 mit dem niveaugesteuerten Ventil 17 wird zum zusätzlichen Abführen von Abwasser bzw. Belebtschlamm herangezogen.

Über die Schlammrückführleitung 21 wird der im Bodenbereich des Absetzbehälters 15 gesammelte Belebtschlamm zurückgebracht zum Sammeltank 16, der ständig eine intakte Biomasse auf Vorrat hält. Sie dient zur sofortigen Betriebsaktivierung des Klärsystems und bietet darüber hinaus eine zusäztliche Sicherung der Vorrichtung gegen Ausspülen der Biologie. Diese Gefahr ist aber bei der Erfindung durch das gewählte Mehrtanksystem mit Absetztank ohnehin auf ein Minimum reduziert. Der Sammeltank ist in nicht gezeigter Weise leicht belüftet.

Das Nachfüllen des Sammeltankes 16 erfolgt kontinuierlich durch Nachfüllen aus der Schlammrückführleitung 21 oder aus einem dem Absetzbehälter 15 zugeordneten, nicht gezeigten Schlammabscheider.

Der vom Absetzbehälter 15 abgeschiedene Schlamm kann anschließend eingedeckt werden und zwar über die herkömmlichen Verfahrensweisen, wie Dekantieren, Pressen, Filtern.

Eine Neutralisation entfällt bei der beschriebenen Vorrichtung, da sich in den Behälter eventuell wechselseitig anfallende, alkalische oder saure Abwässer durch Vermischung selbst neutralisieren und die aktive Biologie den PH-Wert von selbst auf ca. 7 bis 8,5 PH einstellt.

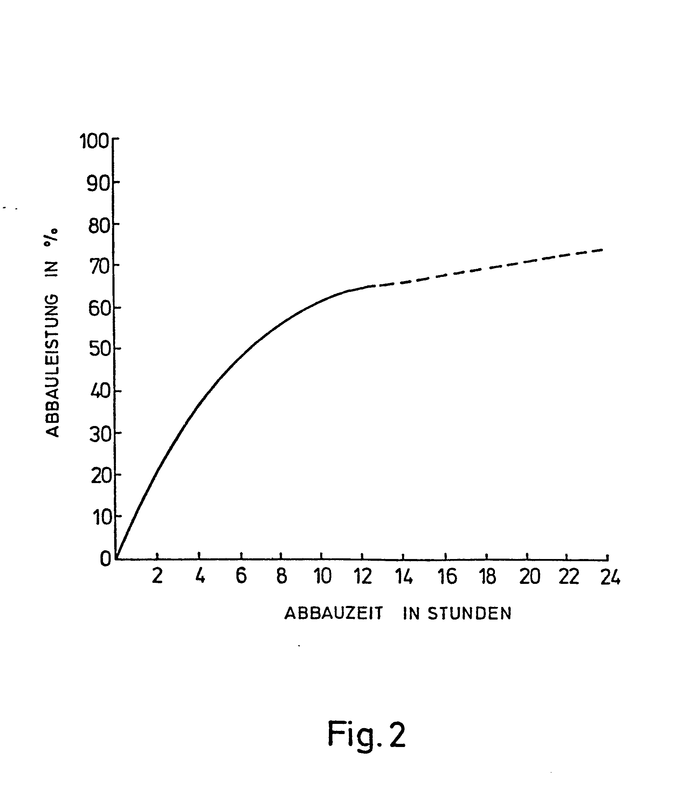

In Fig. 2 der Zeichnung ist auf der Abszisse die Abbauzeit in Stunden und auf der Ordinate die Abbauleistung in Prozent aufgetragen. Die Skizze gibt das Ergebnis eines mit der in Fig. 1 gezeigten Vorrichtung vollzogenen Versuchs wieder. Es ist zu erkennen, daß nach der relativ kurzen Zeit von 12 Stunden eine Abbauleistung von ca. 65% erreicht wird. Dies ist ein beachtlicher Erfolg, der insbesondere auf der intensiven Ausnutzung des eingetragenen Sauerstoffes und der geschlossenen Bauweise der Behälter beruht.

Die Erfindung ist nicht auf das gezeigte Ausführungsbeispiel beschränkt. Sie zeichnet sich insbesondere durch einen geringen wirtschaftlichen Investitionsaufwand, sowie durch einen geringen Raum- und Platzbedarf aus.

**Patentansprüche**

1. Vorrichtung zur biologischen Reinigung vornehmlich stark belasteter organischer Abwässer mit wenigstens zwei miteinander über eine Verbindungsleitung verbundenen, als geschlossene Druckbehälter ausgebildeten Belebtschlammspeicher, die jeweils im Bodenbereich Belüftungseinrichtungen zum Einleiten von Sauerstoff in das Abwasser aufweisen und in ihren jeweiligen oberen Bereichen über dem Abwasserraum einen Gas-, Schwimmschlamm- oder Blähschlamm-Sammelraum besitzen, dadurch gekennzeichnet, daß die Verbindungsleitung beim vorgeschalteten Druckbehälter an der unteren Grenze des Gassammelraumes beginnt und als druckfester Überlauf (12) beim nachgeschalteten Behälter im Abwasserraum endet, wobei zur Bildung einer Kaskadenanordnung für die Behälter (3, 13, 14) der Überlauf (12) des jeweils folgenden Behälters tiefer angeordnet ist als der Überlauf (12) des vorhergehenden und daß die Belüftungseinrichtung jedes Druckbehälters mit einer Sauerstoffzufuhrleitung (6) verbunden ist.

2. Vorrichtung nach Anspruch 1, dadurch gekennzeichnet, daß die Behälter (3, 13, 14) eine gegenüber ihrem Durchmesser größere vertikale Erstreckung aufweisen.

3. Vorrichtung nach Anspruch 1 oder 2, dadurch gekennzeichnet, daß den Druckbehältern (3, 13, 14) wenigstens ein unbelüfteter Absetzbehälter (15) für den Schlamm nachgeschaltet ist.

4. Vorrichtung nach wenigstens einem der Ansprüche 1 bis 3, dadurch gekennzeichnet, daß dem jeweils ersten Druckbehälter (3) ein Sammeltank (16) zum Bereithalten von rückgeführtem Belebtschlamm und Impfen wenigstens dieses Druckbehälters vorgeschaltet ist.

5. Vorrichtung nach wenigstens einem der Ansprüche 1 bis 4, dadurch gekennzeichnet, daß der Abwasserzulauf (2) zum ersten Druckbehälter mit einer Temperaturregulierungseinrichtung versehen ist.

6. Vorrichtung nach Anspruch 5, dadurch gekennzeichnet, daß die Temperaturregulierungseinrichtung als Wärmepumpe ausgebildet ist.

## Claims

1. Apparatus for the biological purification of, in the main, heavily polluted organic waste water, comprising at least two activated sludge storage tanks which are connected to one another via a connecting line and are in the form of closed pressure vessels, and each of which has aeration devices in the region of the base for passing oxygen into the waste water and possesses, in its particular upper region above the waste water space, a collecting space for gas, scum or bulking sludge, characterised in that the connecting line begins in the upstream pressure vessel at the lower boundary of the collecting space for gas, and ends as a pressure-tight overflow (12) in the waste water space in the downstream vessel, the overflow (12) of each subsequent vessel being located at a lower level than the overflow (12) of the preceding one in order to form a cascade arrangement for the vessels (3, 13, 14), and that the aeration device of each pressure vessel is connected to an oxygen feed line (6).

2. Apparatus according to claim 1, characterised in that the vessels (3, 13, 14) have a vertical dimension which is greater than their diameter.

3. Apparatus according to claim 1 or 2, characterised in that at least one unaerated settling tank (15) for the sludge is located downstream of the pressure vessels (3, 13, 14).

4. Apparatus according to at least one of claims 1 to 3, characterised in that the first pressure vessel (3) in each case has upstream from it a collecting tank (16) for holding recycled activated sludge in readiness and innoculating at least this pressure vessel.

5. Apparatus according to at least one of claims 1 to 4, characterised in that the waste water feed (2) to the first pressure vessel is provided with a temperature-regulating device.

6. Apparatus according to claim 5, characterised in that the temperature-regulating device is in the form of a heat pump.

## Revendications

1. Dispositif pour la purification biologique d'eaux usées très chargées en matières organiques notamment, comportant deux réservoirs de bio-aération au moins reliés par une conduite de raccordement, représentés par des réservoirs sous pression fermés et présentant respectivement dans leur partie inférieure des systèmes de diffusion pour l'apport d'oxygène aux eaux usées, ainsi qu'un compartiment collecteur des gaz, boues flottantes ou boues gonflées, prévu dans leur partie supérieure au-dessus du compartiment des eaux usées, caractérisé en ce que le départ de la conduite de raccordement sur le réservoir sous pression amont est prévu à la limite inférieure du compartiment collecteur des gaz, son arrivée dans le compartiment des eaux usées du réservoir aval étant réalisée sous la forme d'un trop-plein (12) résistant à la pression, le montage en cascade des réservoirs (3, 13, 14) étant par ailleurs obtenu par un niveau de plus en plus bas des différents trop-pleins successifs (12), et en ce que le système de diffusion de chaque réservoir sous pression est relié à une conduite d'alimentation en oxygène (6).

2. Dispositif selon la revendication 1, caractérisé par une dimension verticale des réservoirs (3, 13, 14) supérieure à leur diamètre.

3. Dispositif selon une des revendications 1 et 2, caractérisé par un réservoir au moins de décantation des boues (15), non aéré, prévu en aval des réservoirs sous pression (3, 13, 14).

4. Dispositif selon une au moins des revendications 1 à 3, caractérisé en ce que le premier réservoir sous pression (3) est précédé d'un réservoir de stockage (16), qui contient une réserve permanente de boues activées recyclées et permet d'ensemencer le premier réservoir précité au moins.

5. Dispositif selon une au moins des revendications 1 à 4, caractérisé en ce que l'arrivée des eaux usées (2) au premier réservoir sous pression est équipée d'un système de régulation de température.

6. Dispositif selon la revendication 5, caractérisé en ce que le système de régulation de température est une pompe à chaleur.

Fig.1

Fig. 2